# EUROPÄISCHE PATENTSCHRIFT

(11) **EP 3 918 453 B1**
(45) Veröffentlichungstag und Bekanntmachung des Hinweises auf die Patenterteilung: **10.05.2023**
(21) Anmeldenummer: 20716744.6
(22) Anmeldetag: 31.03.2020
(51) Int. Cl.: G06F 3/0362, B60K 37/06, G06F 3/039, G06F 3/044, B60K 35/00

(54) **EINGABEVORRICHTUNG MIT BEWEGLICHER HANDHABE AUF KAPAZITIVER DETEKTIONSFLÄCHE UND KAPAZITIVEN KOPPELEINRICHTUNGEN**
INPUT DEVICE HAVING A MOVABLE HANDLE ON A CAPACITIVE DETECTION SURFACE AND HAVING CAPACITIVE COUPLING APPARATUSES
DISPOSITIF D'ENTRÉE DOTÉ D'UNE MANETTE MOBILE SUR UNE SURFACE DE DÉTECTION CAPACITIVE ET SYSTÈMES DE COUPLAGE CAPACITIFS

(30) Priorität: 29.05.2019 DE 102019114429
(43) Veröffentlichungstag der Anmeldung: 08.12.2021
(73) Patentinhaber: Preh GmbH, 97616 Bad Neustadt a.d. Saale (DE)
(72) Erfinder: SCHMIDT, Benedikt, 97650 Fladungen (DE); WITTWER, Manuel, 97647 Sondheim (DE); KLEIN, Markus, 97616 Salz (DE); RAUCH, Thomas, 97653 Bischofsheim (DE); GREULICH, Elmar, 97506 Grafenrheinfeld (DE); MENNINGER, Stefan, 97076 Würzburg (DE); KLEFFEL, Thomas, 97204 Höchberg (DE)
(74) Vertreter: Lohmanns, Bernard
(86) Internationale Anmeldenummer: PCT/EP2020/059080
(87) Internationale Veröffentlichungsnummer: WO 2020/239295

(56) Entgegenhaltungen:
- US-A1- 2013 181 935
- US-A1- 2014 042 004

## Beschreibung

Die Erfindung betrifft eine Eingabevorrichtung, welche eine kapazitive Detektionseinrichtung aufweist, wobei die Detektionseinrichtung eine Detektionsfläche unter Ausbildung eines der Detektionsfläche zugeordneten ersten Arrays von Arrayelektroden aufweist. Beispielsweise ist dieses erste Array aus zwei Gruppen von Elektroden ausgebildet, die gruppenweise parallel zueinander und dabei eine Gruppenausrichtung vorgebend angeordnet sind und die sich von Gruppe zu Gruppe bei senkrechter gedachter Projektion auf eine gemeinsame Ebene mehrfach durchkreuzen, beispielsweise orthogonal durchkreuzen, wobei sie aber dabei elektrisch isoliert zueinander angeordnet sind. So wird eine regelmäßige Gitterstruktur unter Ausbildung eines sogenannten Knotenpunktes an den Orten der Kreuzung ausgebildet. Der Abstand nächstbenachbarter Knotenpunkte in den beiden durch die Gruppenausrichtung definierten Richtungen beschreibt die Periodizität der Gitterstruktur. Üblicherweise ist der Abstand nächstbenachbarter Knotenpunkte in den beiden durch die Gruppenausrichtung vorgegebenen Richtungen übereinstimmend. Beispielsweise handelt es sich bei der Detektionseinrichtung um einen kapazitiven Touchscreen oder ein kapazitives Touchpad. Bei diesen gattungsgemäßen Eingabevorrichtungen ist ferner eine elektrisch mit den Arrayelektroden verbundene, elektronische Auswerteinheit vorgesehen, um mittels des ersten Arrays von Arrayelektroden ein zugehöriges elektrisches Messfeldarray zur ortsauflösenden Detektion einer kapazitiven Beeinflussung auf der Detektionsfläche auszubilden. Die einzelnen Messfelder des Messfeldarrays werden üblicherweise durch entsprechende Ansteuerung in zeitlicher Abfolge erzeugt.

Auf der durch die Detektionseinrichtung definierten Detektionsfläche ist nunmehr ferner eine Handhabe beweglich angeordnet, deren Stellung mittels der Detektionseinrichtung detektiert werden soll. Dazu weist die Handhabe einen mitbewegten Stellungsgeber auf, um eine durch die Detektionseinrichtung detektierbare Beeinflussung wenigstens einer der Messfelder zu bewirken, woraus eine Stellungs- und/oder Bewegungsinformation ableitbar ist. Eine derartige, aus Kombination eines Touchpads oder Touchscreens mit einer darauf beweglich angeordneten Handhabe gebildeten Eingabevorrichtung wird zunehmend beliebter, da dadurch flexible Eingabemöglichkeiten geschaffen werden und insbesondere bei einem Touchscreen aufgrund der flexiblen Anzeigemöglichkeiten der Handhabe vielfältige Funktionen und Funktionshinweise zugeordnet werden können. Andererseits stellt aber die Handhabe ein gewohntes haptisches Feedback bereit und kann leicht vom Benutzer ohne Sichtkontakt ertastet werden. Aufgrund der gewünschten Nutzung des unter der Handhabe befindlichen und von der Handhabe überdeckten Bereichs der kapazitiven Elektrodenstruktur zur Stellungsdetektion ist eine kapazitive Kopplung zwischen der Handhabe, insbesondere dem dort vorgesehenen Stellungsgeber und dem ersten Array aus Arrayelektroden erforderlich. Das Problem der kapazitiven Kopplung, das sich hier regelmäßig stellt, ergibt sich daraus, dass die Bahn, die der Stellungsgeber bei der händischen Bewegung der Handhabe entlang des Stellweges überschreibt, nie vollständig mit der Struktur, die von dem ersten Array aus Arrayelektroden vorgegeben wird, zur Deckung gebracht werden kann und somit die Stellungsdetektion zumindest für einige Stellungen der Handhabe unzuverlässig und störanfällig ist.

US 2014/042004 A1 offenbart eine Steuervorrichtung für einen Drehknopf, die abnehmbar auf einem Touchpanel angeordnet ist, um das Touchpanel zu steuern. Die Steuervorrichtung des Drehknopfes umfasst eine Basis und einen Drehknopf. Die Basis hat eine Unterseite, eine Oberseite, eine Vielzahl von ersten Flächen, die an der Unterseite angeordnet sind, und mindestens zwei zweite Flächen, die an der Oberseite angeordnet sind. Die zweiten Pads sind elektrisch mit Teilen der ersten Pads verbunden. Der Sockel wird mit seiner Unterseite an das Touchpanel montiert, so dass die ersten Pads das Touchpanel berühren. Der auf der Oberseite angeordnete Drehknopf ist um eine Drehachse drehbar. Der Drehknopf hat eine Vielzahl von dritten Pads, die die Drehachse umgeben. Wenn sich der Drehknopf in einer Richtung relativ zur Basis dreht, werden die dritten Pads nacheinander elektrisch mit den entsprechenden zweiten Pads verbunden.

Vor diesem Hintergrund bestand Bedarf nach einer gattungsgemäßen Eingabevorrichtung, bei der eine für alle Stellungen der Handhabe verbesserte weil gleichmäßigere kapazitive Kopplung und damit verbesserte Stellungsdetektion erreicht wird und insbesondere die kapazitive Kopplung zwischen der kapazitiven Detektionseinrichtung, beispielsweise dem kapazitiven Touchscreen, und dem Stellungsgeber der Handhabe verbessert wird.

Diese Aufgabe wird durch eine Eingabevorrichtung gemäß Anspruch 1 gelöst. Eine gleichermaßen vorteilhafte Verwendung ist Gegenstand des nebengeordneten Anspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung wie definiert in Anspruch 1 betrifft eine Eingabevorrichtung, welche eine kapazitive Detektionseinrichtung beinhaltet und dabei die Detektionseinrichtung eine Detektionsfläche unter Ausbildung eines der Detektionsfläche zugeordneten ersten Arrays von Arrayelektroden aufweist. Die Arrayelektroden sind beispielsweise in einer gemeinsamen Ebene oder auf zwei oder mehr parallelen Ebenen angeordnet. Beispielsweise ist dieses erste Array aus zwei Gruppen von Arrayelektroden ausgebildet, die gruppenweise parallel zueinander und dabei eine Gruppenausrichtung vorgebend angeordnet sind und die sich von Gruppe zu Gruppe bei senkrechter gedachter Projektion auf eine gemeinsame Ebene mehrfach durchkreuzen, beispielsweise orthogonal durchkreuzen, wobei sie aber dabei elektrisch isoliert zueinander angeordnet sind. So wird eine regelmäßige Gitterstruktur unter Ausbildung eines sogenannten Knotenpunktes an den Orten der Kreuzung ausgebildet. Der Abstand nächstbenachbarter Knotenpunkte in den beiden durch die Gruppenausrichtung definierten Richtungen beschreibt die Periodizität der Gitterstruktur. Üblicherweise ist der Abstand der Knotenpunkte in den beiden durch die Gruppenausrichtung vorgegebenen Richtungen übereinstimmend. Dabei ist die Lage der durch die Arrayelektroden zu erzeugenden Messfelder jeweils durch die Position der Knotenpunkte definiert.

Die Bezeichnung Elektrode soll die Ausbildung der betreffenden Arrayelektrode aus leitfähigem Material, beispielsweise aus Metall oder einer metallischen Legierung implizieren. Beispielweise handelt es sich um eine kapazitive Detektionseinrichtung in projiziert-kapazitiver Technologie, insbesondere um eine solche im mutual-capacitance Aufbau. Bei dem mutual-capacitance Aufbau werden Messfelder, wie zuvor beschrieben an den Knotenpunkten jeweils zwischen zwei elektrisch isolierten, sich kreuzenden Arrayelektroden erzeugt. Die Knotenpunkte sind bei handelsüblichen Touchpads oder Touchscreens in einem rechtwinkligen Gitter angeordnet.

Erfindungsgemäß ist ferner eine elektrisch mit den Arrayelektroden verbundene, bevorzugt elektrisch leitend verbundene, elektronische Auswerteinheit vorgesehen, um mittels des erstes Arrays von Arrayelektroden ein zugehöriges, bevorzugt in zeitlicher Abfolge erzeugtes und zeitlich variierendes, Array von elektrischen Messfeldern, im Folgenden als Messfeldarray bezeichnet, zur ortsauflösenden Detektion einer kapazitiven Beeinflussung auf der Detektionsfläche auszubilden.

Die Auswerteinheit ist in der Lage, die Beeinflussung der kapazitiv erzeugten Messfelder zu messen. Wenn das jeweilige Messfeld durch eine äußere Annäherung eines Objekts beeinflusst wird, wird die durch die Auswerteinheit gemessene elektrische Beeinflussung, beispielsweise am betreffenden Knotenpunkt, verändert und detektiert und kann aufgrund der Arrayelektrodenstruktur, die bevorzugt nach Reihen und Spalten gegliedert ist, einem Ort auf der Detektionsfläche zugeordnet werden.

Die Eingabevorrichtung weist erfindungsgemäß eine Handhabe auf, die beweglich entlang eines zur Detektionsfläche parallelen Stellwegs auf der Detektionsfläche mittels Lagermittel angeordnet ist, bevorzugt über die Lagermittel befestigt ist, um eine Bedieneingabe bei Bewegung, insbesondere unter Berührung der Handhabe durch einen Bediener, vorzunehmen. Beispielsweise handelt es sich um eine entlang eines linearen Stellwegs in einer zur Detektionsfläche parallelen Richtung translatorisch bewegbar gelagerte Handhabe. Bevorzugt ist die Handhabe um eine zur Detektionsfläche orthogonale Drehachse drehbeweglich an der Detektionsfläche gelagert und qualifiziert die Handhabe der Eingabevorrichtung damit als einen Drehsteller.

Erfindungsgemäß ist ferner ein mit der Handhabe mitbewegter und damit ein sich mit der Handhabe synchron bewegender Stellungsgeber vorgesehen. Es handelt sich dabei beispielsweise um einen elektrischen Leiter, der beispielsweise als Federzunge ausgebildet ist. Der Stellungsgeber ist beispielsweise gegenüber der Auswerteinheit elektrisch isoliert ausgebildet. Er kann ein oder mehrteilig ausgebildet sein, wobei die mehreren Teile bevorzugt elektrisch leitend verbunden sind. In einer Ausgestaltung ist der Stellungsgeber mit der dem Bediener zugewandten Oberfläche der Handhabe elektrisch leitend verbunden, um bei Berührung durch den Bediener auf dessen elektrisches Potenzial ge- oder entladen zu werden.

Es ist ferner eine auf der Detektionsfläche fest angeordnete, ein- oder mehrteilige Koppeleinrichtung vorgesehen. Diese weist eine der Detektionsfläche zugewandte, erste Fläche auf, auf der ein zweites Array von Koppelelektroden zur kapazitiven Kopplung mit den zuvor beschriebenen Arrayelektroden ausgebildet ist, ohne diese elektrisch zu kontaktieren. Die Koppeleinrichtung weist ferner eine dem Stellungsgeber zugewandte und der Detektionsfläche abgewandte, zweiten Fläche auf, auf der ein drittes Array aus mehreren beabstandet zueinander angeordneten Kontaktflächen ausgebildet ist. Die Kontaktflächen sind entlang einer oder entlang mehrerer zum Stellweg parallelen Bahnen so angeordnet, dass sie selektiv und abhängig von der Stellung der Handhabe entlang des Stellweges von dem Stellungsgeber berührkontaktiert werden. Die Kontaktflächen sind aus elektrisch leitfähigem Material. Sie sind beispielsweise durch leitfähige Beschichtung auf einem Substrat, wie es beispielsweise bei einer Leiterplatte der Fall ist, ausgebildet.

Die Koppeleinrichtung beinhaltet mehrere elektrisch leitenden Verbindungen, deren Anzahl mindestens der Anzahl der Kontaktflächen entspricht und die ausgebildet sind, jeweils eine der Koppelelektroden elektrisch leitend mit einer Kontaktfläche zu verbinden, um bei Berührkontaktierung mit dem Stellungsgeber stellungsabhängig wenigstens ein Messfeld und bevorzugt primär eins der Messfelder des Messfeldarrays kapazitiv zu beeinflussen. In einer bevorzugten Ausgestaltung ist wenigstens eine Koppelelektrode vorgesehen, die mit mehreren Kontaktflächen über mehrere, elektrisch leitende Verbindungen elektrisch leitend verbunden ist, wodurch sich die Anzahl der Verbindungen gegenüber der Anzahl der Kontaktflächen erhöht.

Erfindungsgemäß ist die elektronische Auswerteinheit ausgebildet, die Beeinflussung des Messfeldes aufgrund wenigstens einer kapazitiven Kopplung zu detektieren, wobei die dabei selektierte Kontaktfläche von der Stellung des Stellungsgebers bestimmt ist und sich die kapazitive Kopplung jeweils zwischen der stellungsabhängig durch den Stellungsgeber über die Kontaktfläche und die jeweilige elektrische Verbindung kontaktierte Koppelelektrode und dem benachbart angeordneten und zugehörigen Messfeld des Messfeldarrays ergibt, welches durch das erste Array von Arrayelektroden erzeugt wird. Wie zuvor erläutert, ist es beispielsweise möglich, dass aufgrund mehrfacher kapazitiver Kopplung es in einer oder mehreren Stellungen des Stellungsgebers zu einer Beeinflussung mehrerer Messfelder unterschiedlicher Arrayelektroden kommt, da gemäß einer Ausgestaltung die Kontaktfläche mit mehreren Koppelelektroden über jeweils eine Verbindung elektrisch leitend verbunden ist, oder der Stellungsgeber parallel in einer Stellung mehrere Kontaktflächen kontaktiert. Die Auswerteinheit ist in der Lage die zuvor erläuterte stellungsabhängige Beeinflussung der Messfelder zu detektieren, um eine Stellungsinformation und/oder Bewegungsinformation der Handhabe zu erhalten und auszugeben. Anders ausgedrückt, die Auswerteinheit ist in der Lage anhand der von der Stellung der Handhabe und damit dem Stellungsgeber bewirkte Beeinflussung der betreffenden Messfelder zu identifizieren und somit der Beeinflussung eine Stellungsinformation zuzuordnen und diese beispielsweise zur Vornahme einer Steuer- oder Schaltfunktion an eine übergeordnete Steuereinrichtung auszugeben.

Erfindungsgemäß weist die Koppeleinrichtung ein Substrat aus elektrischem isolierendem Material, wie einem Kunststoff, auf und es sind die elektrisch leitenden Verbindungen wenigstens abschnittsweise als durch eine leitfähige Beschichtung des Substrats bereitgestellte Leiterbahn ausgebildet. Dadurch ist vergleichsweise einfach der Versatz der Kontaktfläche und der zugehörigen Arrayelektrode auszugleichen, da dieser von Kontaktfläche zu Kontaktfläche unterschiedlich ausfallen kann, insbesondere da sich das erste und zweite Array in ihrer Struktur unterscheiden und nicht deckungsgleich ausgebildet sein können, da der Stellweg sich nicht an der Struktur des ersten Arrays orientiert, beispielsweise gegenüber dem Gitter des ersten Arrays gekrümmt verläuft oder schräg zum Gitter verläuft. Der verbleibende Rest der leitenden Verbindung kann beispielsweise als Stanzteil aus einem Metall oder einer metallischen Legierung ausgebildet sein. Bevorzugt ist die leitende Verbindung auf ihrer gesamten Länge zwischen Kontaktfläche und Koppelelektrode als leitfähige Beschichtung eines Substrats ausgebildet.

Um die Herstellung zu vereinfachen, ist bevorzugt vorgesehen, dass die Kontaktflächen und/oder die Koppelelektroden ebenfalls als leitfähige Beschichtung des oder eines weiteren Substrats ausgebildet sind. Beispielsweise ist das Substrat beiderseitig beschichtet.

Bevorzugt ist vorgesehen, dass die Leiterbahnen sich im Wesentlichen parallel zur Detektionsfläche erstrecken. Anders ausgedrückt die dominierende Erstreckungsrichtung ist parallel zur Detektionsfläche. Bevorzugt ist die Leiterbahn in einer zur Detektionsfläche parallelen Ebene angeordnet.

Bevorzugt ist vorgesehen, dass sich wenigstens zwei Leiterbahnen, bevorzugt mehr als zwei Leiterbahnen, meist bevorzugt mindestens die Hälfte bis alle Leiterbahnen, in der Länge unterscheiden. Als Leiterbahn wird der auf einem Substrat befindliche Teil der leitenden Verbindung zwischen einer Kontaktfläche und einer Koppelelektrode verstanden. Als Länge der Leiterbahnen wird die Länge des auf dem Substrat befindlichen Teils verstanden, wobei der Übergang zur Koppelelektrode oder zur Kontaktfläche durch deren äußeren Umriss jeweils bestimmt ist. Die Kontaktfläche ist durch den äußeren Umriss der aufgrund der Bahn des Stellungsgebers bestimmten Berührfläche vorgegeben.

Bevorzugt sind mehrere, bevorzugt die Hälfte bis alle Leiterbahnen ausgebildet, eine solche Kontaktfläche mit einer solchen Koppelelektrode zu verbinden, deren geometrische Mittelpunkte bei Projektion auf die Detektionsfläche versetzt zueinander angeordnet sind.

Gemäß der Erfindung ist das erste Array von Arrayelektroden durch eine regelmäßige gedachte Struktur, eine Gitterstruktur, mit einer kleinsten Periodizität, wie dem kleinsten Abstand nächstbenachbarter Knotenpunkte, beschrieben und das zweite Array eine Struktur, insbesondere eine Regelmäßigkeit, aufweist, die durch die erste Periodizität vorgegeben ist. Beispielsweise weisen die geometrischen Mittelpunkte des Koppelelektroden einen Abstand auf, der dem ganzzahligen Vielfachen des kleinsten Abstandes nächstbenachbarter Knotenpunkte entspricht.

Erfindungsgemäß ist vorgesehen, dass sich die wenigstens zwei Verbindungen um mindestens die kleinste Periodizität der regelmäßigen, gedachten Struktur des ersten Arrays von Arrayelektroden in der Länge ihrer Leiterbahnen unterscheiden. Beispielsweise unterscheiden sich die Längen im Betrag um wenigstens den kleinsten Abstand nächstbenachbarter Knotenpunkte der das erste Array beschreibenden Gitterstruktur.

Bevorzugt weist die Koppeleinrichtung einen das Substrat beinhalten Schichtaufbau aus mehreren Schichten, wie eine Multilayer-Leiterplatte, auf und die Kontaktflächen und/oder die Koppelelektroden sind als leitfähige Beschichtung des Schichtaufbaus ausgebildet. Bevorzugt sind die Leiterbahnen zur elektrischen Verbindung zwischen den Kontaktflächen und den Koppelelektroden in den Schichtaufbau integriert.

Bevorzugt ist eine Rasteinrichtung zur Erzeugung einer Rasthaptik und Vorgabe vorgegebener Stellungen entlang des Stellwegs der Handhabe vorgesehen. Beispielsweise weist die Rasteinrichtung eine Rastnase und eine Rastkontur auf, wobei die Rastnase in Wirkeingriff mit der Rastkontur steht und gegen die Rastkontur vorgespannt ist und bei der Verstellung der Handhabe auf der Rastkontur abläuft, um jeweils nach Überwinden einer Rasterhebung in eine Rastvertiefung einzugreifen, wobei letztere die vorgegebenen Stellungen definieren.

Erfindungsgemäß ist wenigstens eine Koppelelektrode vorgesehen, die mit mehreren Kontaktflächen über mehrere Leiterbahnen elektrisch leitend verbunden ist, die sich bevorzugt in der Länge unterscheiden.

Bevorzugt ist die Koppeleinrichtung ausgebildet, dass beim Verstellen der Handhabe entlang der Stellwegs in einer Verstellrichtung mehrere unmittelbar benachbarte und vorgegebene Stellungen überfahren werden, wobei von den in diesen Stellungen insgesamt mittels des Stellungsgebers kontaktierten Koppelelektroden wenigstens zwei, bevorzugt alle, so angeordnet sind, dass deren räumlicher Abstand größer als die erste Periodizität, bevorzugt größer als der kleinste Abstand nächstbenachbarter Knotenpunkte des ersten Arrays ist.

Gemäß einer Ausgestaltung ist der Stellungsgeber elektrisch leitend mit einer leitfähigen, für die Berührung durch einen Bediener ausgebildeten und angeordneten Oberfläche verbunden, dass er darüber mit Potenzial beaufschlagt werden kann. Bevorzugt ist jedoch vorgesehen, dass die Koppeleinrichtung derart ausgebildet ist, dass über die Koppeleinrichtung der Stellungsgeber kapazitiv mit einem elektrischen Feld wenigstens einer Arrayelektrode gekoppelt wird.

Bevorzugt weist die Koppeleinrichtung wenigstens eine Speiseelektrode auf ihrer ersten Fläche und wenigstens eine damit elektrisch leitende Speisekontaktfläche auf ihrer zweiten Seite auf, mittels derer der Stellungsgeber zumindest in den vorgegebenen Stellungen in Berührkontakt steht, um den Stellungsgeber mit dem elektrischen Feld wenigstens eine Arrayelektrode kapazitiv zu koppeln.

Bevorzugt ist die oder sind die Speiselektroden bei einer drehbeweglich gelagerten Handhabe bezogen auf die zugehörige Drehachse bezüglich der zweiten Arrays aus Koppelelektroden radial außen angeordnet.

Bevorzugt ist die oder sind die Speisekontaktflächen bei einer drehbeweglich gelagerten Handhabe bezogen auf die zugehörige Drehachse bezüglich des dritten Arrays aus Kontaktflächen radial außen angeordnet.

Die Erfindung betrifft ferner die Verwendung der Eingabevorrichtung in einer der zuvor beschriebenen Ausführungsformen in einem Kraftfahrzeug.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Fig. 1: eine perspektivische Aufsicht einer Ausführungsform der erfindungsgemäßen Eingabevorrichtung 1;
- Fig. 2: eine Schnittansicht der zur erfindungsgemäßen Eingabevorrichtung gehörigen Koppeleinrichtung 5 in einer beispielhaften Ausführungsform;
- Fig. 3: eine Aufsicht auf die dem Stellungsgeber 5 zugewandte, zweite Seite der zur erfindungsgemäßen Eingabevorrichtung gehörigen Koppeleinrichtung 5 in einer beispielhaften Ausführungsform;
- Fig. 4: eine Aufsicht auf die dem Stellungsgeber 5 zugewandte, erste Seite der zur erfindungsgemäßen Eingabevorrichtung gehörigen Koppeleinrichtung 5 in einer beispielhaften Ausführungsform, wobei zum besseren Verständnis das darunter liegende erste Array aus Koppelelektroden eingeblendet ist; ;
- Fig. 5: eine Aufsicht auf die dem Stellungsgeber 5 zugewandte, erste Seite der zur erfindungsgemäßen Eingabevorrichtung gehörigen Koppeleinrichtung 5 in einer beispielhaften weiteren Ausführungsform, wobei wiederum zum besseren Verständnis das darunter liegende erste Array aus Koppelelektroden eingeblendet ist.

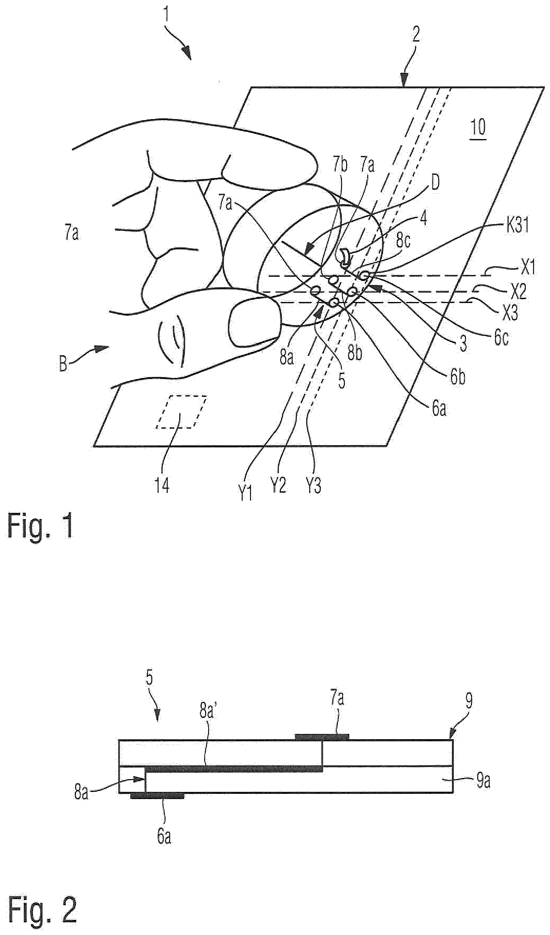

Figur 1 zeigt eine erfindungsgemäße Eingabevorrichtung 1 mit einem als kapazitive Detektionseinrichtung 2 fungierenden Touchscreen. Die Detektionseinrichtung 2 definiert eine dem Bediener B zugewandte Detektionsfläche 10, auf der eine Handhabe 3 um eine Drehachse D drehbeweglich mittels der in Figur 1 aus Gründen der besseren Anschauung nicht dargestellten Lagermittel gelagert angeordnet ist und somit einen sogenannten Drehsteller ausbildet. Die kapazitive Detektionseinrichtung 2 weist parallel verlaufende Arrayelektroden X1 bis X3 auf, sowie senkrecht dazu laufende Arrayelektroden Y1 bis Y3 als Gegenelektroden auf, wodurch ein erstes Array ausgebildet ist. Das erste Array aus Arrayelektroden X1 bis X3, Y1 bis Y3 ist in den Figuren nicht vollständig und nicht maßstabsgetreu eingezeichnet und soll nur der schematischen Deutlichmachung des prinzipiellen Aufbaus dienen. Die Kreuzungspunkte der Arrayelektroden X1 bis X3 mit den Arrayelektroden Y1 bis Y3 bilden jeweils einen imaginären Knotenpunkt aus, der jeweils Ausgangspunkt eines kapazitiven Messfeldes ist. In der Figur ist aus Gründen der Übersichtlichkeit lediglich ein Kotenpunkt, nämlich K31 näher bezeichnet. Die Nummerierung der weiteren Knotenpunkte ergibt sich analog dazu.

Mit den Arrayelektroden X1 bis X3 und Y1 bis Y3 ist eine elektronische Auswerteinheit 14 elektrisch verbunden, die einige Arrayelektroden, beispielsweise die Elektroden X1 bis X3 selektiv und in zeitlicher Abfolge zur Erzeugung eines zugehörigen Messfeldes mit jeweils einem zugehörigen Potenzial beaufschlagt, um anhand der Beeinflussung dieser Messfelder eine Berührung durch den Bediener B oder je nach Lage der betreffenden Knotenpunkte bezüglich der Handhabe 3 eine Stellung der Handhabe 3 zu detektieren. Zur Beeinflussung der betreffenden Messfelder weist die Handhabe 3 auf ihrer der Detektionsfläche 10 zugewandten Seite einen Stellungsgeber 4 auf, der in der vorliegenden Ausführungsform gegenüber dem Bediener B während dessen Berührung der Handhabe 3 elektrisch isoliert angeordnet ist und statt mit dem Körperpotenzial des Bedieners B beaufschlagt zu sein, mit dem elektrischen Feld wenigstens einer der Arrayelektroden kapazitiv gekoppelt ist. Es sind mehrere, insbesondere sich gleichmäßig über den Stellweg der Handhabe 3 verteilende, vorgegebene Stellungen vorgesehen, von denen eine mögliche Stellung in der Figur 1 gezeigt ist. Diese Stellungen sind durch eine nicht dargestellte Rasteinrichtung vorgegeben.

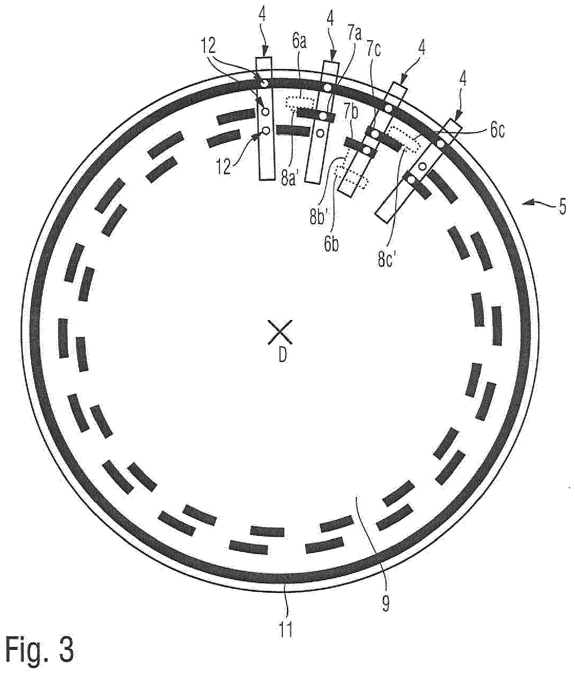

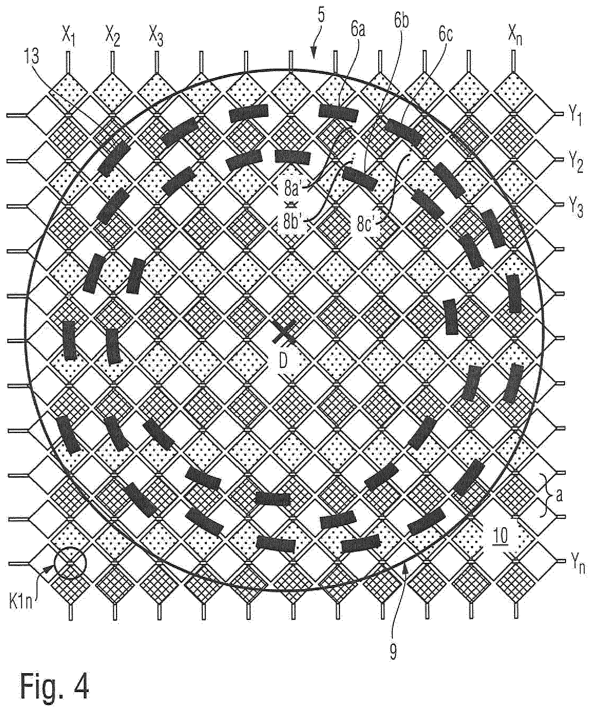

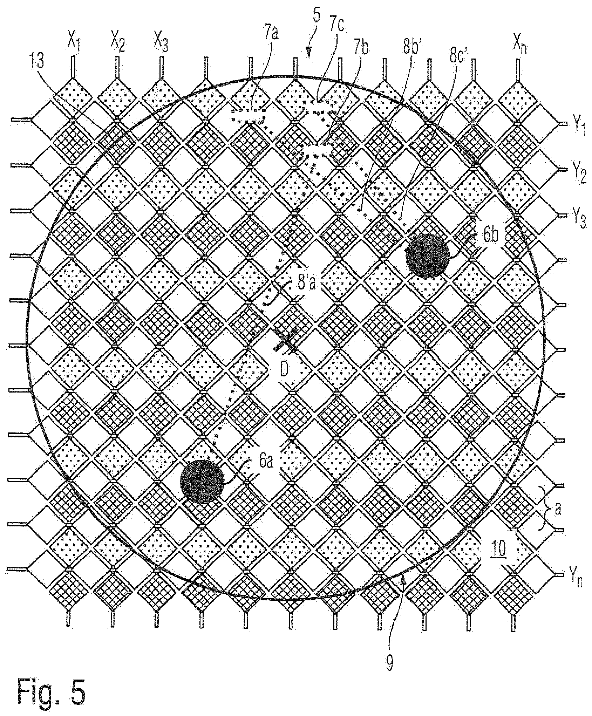

Zur verbesserten, kapazitiven Kopplung zwischen dem Stellungsgeber 4 und je nach Stellung einem der an den Knotenpunkten K11 bis K33 befindlichen Messfeldern ist erfindungsgemäß eine ruhend auf der Detektionsfläche 10 angeordnete Koppeleinrichtung 5 vorgesehen. Diese weist eine der Detektionsfläche 10 zugewandte, erste Fläche und eine dem Stellungsgeber 4 zugewandte zweite Fläche auf. Die erste Fläche ist beispielsweise angrenzend an die Detektionsfläche angeordnet. Die erste Fläche ist in zwei möglichen Ausführungsformen in den Figuren 4 und 5 gezeigt. Die zweite Fläche ist in einer Ausführungsform in Figur 3 gezeigt. Die erste Fläche trägt ein in Figur 1 nur ausschnittsweise gezeigtes, zweites Array von Koppelelektroden 6a, 6b, 6c, während die zweite Fläche ein in Figur 1 ebenfalls nur ausschnittsweise gezeigtes, drittes Array von Kontaktflächen 7a, 7b, 7c trägt. Die Platzierung der Koppelelektroden 6a, 6b, 6c des zweiten Arrays auf der ersten Seite ist nicht deckungsgleich mit der Platzierung der Kontaktflächen 7a, 7b, 7c des dritten Arrays auf der zweiten Seite, was darauf zurückzuführen ist, dass die Platzierung der Kontaktflächen 7a, 7b, 7c anderen Anforderungen unterliegt als die der Koppelelektroden 6a, 6b, 6c. Zum Erreichen einer effektiven Kopplung orientieren sich letztere an der Gitterstruktur des ersten Arrays, so dass der geometrische Mittelpunkt der Koppelelektrode 6a, 6b, 6c jeweils einem Knotenpunkt, beispielsweise K31 aus Figur 1, gegenüberliegt, ohne dass sich Koppelelektroden 6a, 6b, 6c und Arrayelektroden X1 bis X3 und Y1 bis Y3 des Touchscreens berühren.

Die Kontaktflächen 7a, 7b, 7c orientieren sich hingegen an der Bahn des Stellungsgebers 4 entlang dieser sich bei der händischen Bewegung der Handhabe 3 bewegt und stellungsabhängig einen Berührkontakt mit wenigstens einer der Kontaktflächen 7a, 7b, 7c herstellt. Um stellungsabhängig nun eines der Messfelder der Arrayelektroden mittels des Stellungsgebers 4 über eine der Koppelelektroden 6a, 6b, 6c kapazitiv zu beeinflussen, ist jeweils eine von einer Kontaktfläche 7a, 7b, 7c ausgehende, sich zu einer Koppelelektrode 6a, 6b, 6c erstreckende elektrisch leitende Verbindung 8a, 8b, 8c vorgesehen. Um das Anordnungsproblem von Koppelelektroden 6a, 6b, 6c einerseits und Kontaktflächen 7a, 7b, 7c zu lösen, weist die Koppeleinrichtung 5 ein in der Figur 2 im Schnitt gezeigtes Substrat 9a aus elektrisch isolierendem Material auf, auf dem die elektrisch leitenden Verbindungen 8a jeweils wenigstens abschnittsweise als durch eine leitfähige Beschichtung des Substrats 9a bereitgestellte Leiterbahn 8a , 8b , 8c ausgebildet sind. Bei der vorliegenden Ausgestaltung ist das Substrat 9a ein faserverstärkter Kunststoff oder eine Kunststofffolie und Teil eines zur Koppeleinrichtung gehörigen Schichtaufbaus 9. Die Leiterbahnen 8a , 8b, 8c sind bevorzugt in den Schichtaufbau integriert. Die Kontaktflächen 7a, 7b, 7c sowie die Koppelelektroden 6a, 6b, 6c sind jeweils als leitfähige Beschichtungen der äußeren Schichten des Schichtaufbaus 9 ausgebildet. Beispielsweise handelt es sich bei dem Schichtaufbau um eine Multilayer-Leiterplatte, bei der die Leiterbahnen 8a , 8b , 8c in den Multilayer eingebettet sind.

Aus Figur 2 wird, obwohl lediglich eine der Leiterbahnen 8a , 8b, 8c aus Figur 1 gezeigt ist, ferner deutlich, dass die Leiterbahnen 8a , 8b , 8c sich im Wesentlichen parallel zur Detektionsfläche 10 aus Figur 1 erstrecken und jeweils dazu dienen den Versatz zwischen dem geometrischen Mittelpunkt der Kontaktfläche 7a, 7b, 7c und dem geometrischen Mittelpunkt der Koppelelektroden 6a, 6b, 6c zu überbrücken. Ferner wird deutlich, dass sich wenigstens zwei Verbindungen bezüglich der Länge ihrer Leiterbahnen, nämlich 8b und 8c, unterscheiden. Anhand Figur 3 wird der Aufbau der Koppeleinrichtung 5 auf ihrer dem Stellungsgeber 4 zugewandten, zweiten Fläche deutlich. Zur Verdeutlichung ist der Stellungsgeber 4 in vier benachbarten vorgegebenen Stellungen überlagert eingezeichnet, wobei die Punkte 12 die Lage seiner Federzungen identifizieren, mit denen er stellungsabhängig die Kontaktflächen 7a, 7b, 7c berührkontaktiert aber auch eine ringförmige Speisekontaktfläche 11 berührt, um so mit einem elektrischen Feld wenigstens einer Arrayelektrode gekoppelt zu sein, da die Speisekontaktfläche 11 in elektrischem Kontakt mit mehreren Speiselektroden 13 steht, die auf der ersten Fläche der Koppeleinrichtung 5 angeordnet sind. Gestrichelt ist die Position und der Umriss der auf der ersten Fläche der Koppeleinrichtung 5 befindlichen Koppelelektroden 6a, 6b, 6c eingezeichnet, die über die in den Schichtaufbau 9 integrierten Leiterbahnen 8a , 8b, 8c kontaktiert sind.

Figur 4 ist eine Ansicht der der Detektionsfläche 10 zugewandten ersten Seite der Koppeleinrichtung 5, wobei dieser die Ansicht auf die Detektionsfläche 10 mit dem ihr zugeordneten ersten Array aus Arrayelektroden X1 bis Xn, Y1 bis Yn zur Verdeutlichung der Lage der Koppelelektroden 6a, 6b, 6c überlagert ist. Das Array bildet eine gedachte, regelmäßige Gitterstruktur aus, wobei die Lage der Knotenpunkte eine kleinste Periodizität definiert, die durch den kleinsten Abstand a nächstbenachbarter Knotenpunkte vorgegeben ist. Es zeigt sich, dass die Koppelelektroden mit ihrem geometrischen Mittelpunkt jeweils über einem zugehörigen Knotenpunkt platziert sind. In Figur 4 ist beispielsweise K1n als einer der vielen Knotenpunkte markiert. Der Nomenklatur entsprechend, ist die Koppelelektrode 6a dem Knotenpunkt K71 zugeordnet. Die Koppelelektroden 6a bis 6c dienen bei entsprechender Stellung der Handhabe 3 der Bereitstellung einer kapazitiven Kopplung zwischen dem Stellungsgeber 4 und den an den zugeordneten Knotenpunkten befindlichen Messfeldern, so dass es zu einer Beeinflussung der jeweiligen Messfelder im Bereich der Knotenpunkte kommt, was von der Auswerteinheit 14 detektierbar ist und der Stellungsdetektion der Auswerteinheit 14 dient, so dass diese eine Stellungsinformation oder wenigstens Bewegungsinformation auszugeben vermag. Während Figur 4 eine Ausführungsform der Koppeleinrichtung 5 zeigt, bei der eine Anzahl von Koppelelektroden 6a, 6b, 6c die der Anzahl an vorgegebenen Stellungen der Handhabe entspricht, um so die Stellung absolut detektieren zu können, sind Ausführungsformen denkbar, bei der es lediglich aus eine relative Detektion ankommt, bei der lediglich das Maß der Drehung und/oder die Drehrichtung als Bewegungsinformation detektiert werden muss. Eine derartige Ausführungsform ist in Figur 5 gezeigt, bei der mehrere Kontaktflächen mit einer Koppelelektrode 6a, 6b verbunden sind. So sind, wie gezeigt, lediglich zwei Koppelelektroden 6a, 6b vorgesehen, wobei die Kontaktflächen 7a, 7b, 7c in Umlaufrichtung um die Drehachse D alternierend mit einer der Koppelelektroden 6a, 6b verbunden sind. Die zugehörigen elektrischen Verbindungen weisen hier Leiterbahnen 8a , 8b, 8c auf die sich in ihrer Länge um ein Vielfaches des kleinsten Abstandes a nächstbenachbarter Knotenpunkte unterscheiden.

## Patentansprüche

1. Eingabevorrichtung (1) aufweisend:
eine kapazitive Detektionseinrichtung (2), welche eine Detektionsfläche (10) unter Ausbildung eines der Detektionsfläche (10) zugeordneten ersten Arrays von Arrayelektroden (X1 bis Xn, Y1 bis Yn), aufweist;
eine elektrisch mit den Arrayelektroden (X1 bis Xn, Y1 bis Yn) verbundene, elektronische Auswerteinheit (14), um mittels des ersten Arrays von Arrayelektroden (X1 bis Xn, Y1 bis Yn) ein zugehöriges elektrisches Messfeldarray zur ortsauflösenden Detektion einer kapazitiven Beeinflussung auf der Detektionsfläche (10) auszubilden;
eine Handhabe (3), die auf der Detektionsfläche (10) entlang eines zur Detektionsfläche (10) parallelen Stellweges beweglich gelagert ist, um eine Bedieneingabe mittels händisch bewirkter Bewegung in Bewegungsrichtung, beispielsweise unter Berührung der Handhabe (3) durch einen Bediener (B), vorzunehmen;
ein mit der Handhabe (3) mitbewegter Stellungsgeber (4);
und
eine auf der Detektionsfläche (10) angeordnete Koppeleinrichtung (5) mit einer der Detektionsfläche (10) zugewandten, ersten Fläche, auf der ein zweites Array von Koppelelektroden (6a, 6b, 6c) zur kapazitiven Kopplung mit den Arrayelektroden (X1 bis Xn, Y1 bis Yn) ausgebildet ist und mit einer dem Stellungsgeber (4) zugewandten und der Detektionsfläche (10) abgewandten, zweiten Fläche, auf der ein drittes Array aus mehreren, beabstandet zueinander angeordneten Kontaktflächen (7a, 7b, 7c) ausgebildet ist, wobei die Kontaktflächen entlang einer oder entlang mehrerer zum Stellweg parallelen Bahnen so angeordnet, dass sie selektiv und abhängig von der Stellung der Handhabe (3) entlang des Stellweges von dem Stellungsgeber (4) berührkontaktiert werden;
wobei die Koppeleinrichtung (5) mehrere elektrisch leitende Verbindungen (8a, 8b, 8c) beinhaltet, deren Anzahl mindestens der Anzahl der Kontaktflächen (7a, 7b, 7c) entspricht und die ausgebildet sind, jeweils eine der Koppelelektroden (6a, 6b, 6c) elektrisch leitend mit einer Kontaktfläche (7a, 7b, 7c) zu verbinden, um bei Berührkontaktierung mit dem Stellungsgeber (4) stellungsabhängig wenigstens eines der Messfelder des Messfeldarrays kapazitiv zu beeinflussen;
und wobei die elektronische Auswerteinheit (14) ausgebildet ist, die stellungsabhängige Beeinflussung des Messfeldarrays zu detektieren, um eine Stellungsinformation und/oder Bewegungsinformation der Handhabe (3) zu erhalten und auszugeben, wobei die Koppeleinrichtung (5) wenigstens ein Substrat (9a) aus elektrisch isolierendem Material aufweist und die leitenden Verbindungen jeweils wenigstens abschnittsweise als durch eine leitfähige Beschichtung des Substrats (9) bereitgestellte Leiterbahn (8a', 8b', 8c') ausgebildet sind und sich wenigstens zwei Verbindungen (8a, 8b, 8c) in der Länge ihrer Leiterbahnen (8a', 8b', 8c') unterscheiden, wobei das erste Array von Arrayelektroden (X1 bis Xn, Y1 bis Yn) eine regelmäßige Gitterstruktur mit einer kleinsten Periodizität, die durch den kleinsten Abstand (a) nächstbenachbarter Knotenpunkte (K1n, K31) beschrieben ist, aufweist;
**dadurch gekennzeichnet, dass** die Koppeleinrichtung (5) derart auf der Detektionsfläche (10) festgelegt ist, dass die geometrischen Mittelpunkte der Koppelektroden (6a, 6b, 6c) jeweils einem Knotenpunkt (K1n, K31) gegenüberliegen; und dass sich wenigstens zwei Verbindungen (8a, 8b, 8c) um mindestens die kleinste Periodizität in der Länge ihrer Leiterbahnen (8a', 8b', 8c') unterscheiden.

2. Eingabevorrichtung (1) gemäß dem vorhergehenden Anspruch, wobei die Leiterbahnen (8a', 8b', 8c') sich im Wesentlichen parallel zur Detektionsfläche (10) erstrecken.

3. Eingabevorrichtung (1) gemäß einem der vorhergehenden Ansprüche, wobei die Koppeleinrichtung (5) einen das Substrat (9a) beinhaltenden Schichtaufbau (9) aus mehreren Schichten aufweist und die Kontaktflächen (7a, 7b, 7c) und/oder die Koppelelektroden (6a, 6b, 6c) als leitfähige Beschichtung der äußeren Schichten des Schichtaufbaus (9) ausgebildet sind.

4. Eingabevorrichtung (1) gemäß einem der vorhergehenden Ansprüche, wobei mehrere, bevorzugt die Hälfte bis alle, Leiterbahnen (8a', 8b', 8c') ausgebildet sind, eine solche Kontaktfläche (7a, 7b, 7c) mit einer solchen Koppelelektrode (6a, 6b, 6c) zu verbinden, deren geometrische Mittelpunkte bei senkrechter Projektion auf die Detektionsfläche (10) versetzt zueinander angeordnet sind.

5. Eingabevorrichtung (1) gemäß einem der vorhergehenden Ansprüche, wobei eine Rasteinrichtung zur Erzeugung einer Rasthaptik und Vorgabe vorgegebener Stellungen entlang des Stellwegs der Handhabe (3) vorgesehen ist.

6. Eingabevorrichtung (1) gemäß dem vorhergehenden Anspruch, wobei wenigstens eine Koppelelektrode (6a, 6b) vorgesehen ist, die mit mehreren Kontaktflächen (7a, 7b, 7c) über mehrere Leiterbahnen (8a', 8b', 8c') elektrisch leitend verbunden ist, die sich bevorzugt in der Länge unterscheiden.

7. Eingabevorrichtung (1) gemäß einem der vorhergehenden Ansprüche, wobei die Koppeleinrichtung (5) ausgebildet ist, dass beim Verstellen der Handhabe (3) entlang des Stellwegs in einer Verstellrichtung mehrere unmittelbar benachbarte und vorgegebene Stellungen überfahren werden, wobei von den in diesen Stellungen insgesamt mittels des Stellungsgebers (4) kontaktierten Koppelelektroden (6a, 6b, 6c) wenigstens zwei, bevorzugt alle, so angeordnet sind, dass deren räumlicher Abstand größer als die kleinste Periodizität, ist.

8. Eingabevorrichtung (1) gemäß einem der vorhergehenden Ansprüche, wobei die Koppeleinrichtung (5) ausgebildet ist, dass über die Koppeleinrichtung (5) der Stellungsgeber (4) kapazitiv mit einem elektrischen Feld wenigstens einer Arrayelektrode gekoppelt wird.

9. Eingabevorrichtung (1) gemäß dem vorhergehenden Anspruch, wobei die Koppeleinrichtung (5) wenigstens eine Speiseelektrode (13) auf ihrer ersten Fläche und mindestens eine damit elektrisch leitend verbundene Speisekontaktfläche (11) auf ihrer zweiten Fläche aufweist, mittels derer der Stellungsgeber (4) zumindest in den vorgegebenen Stellungen in Berührkontakt steht, um den Stellungsgeber (4) mit dem elektrischen Feld wenigstens einer Arrayelektrode (X1 bis Xn, Y1 bis Yn) zu koppeln.

10. Verwendung der Eingabevorrichtung (1) gemäß einem der vorhergehenden Ansprüche in einem Kraftfahrzeug.

## Claims

1. Input apparatus (1) comprising:
a capacitive detection device (2) comprising a detection surface (10), a first array of array electrodes (X1 to Xn, Y1 to Yn) assigned to the detection surface (10) being formed;
an electronic evaluation unit (14) electrically connected to the array electrodes (X1 to Xn, Y1 to Yn), in order to form, by means of the first array of array electrodes (X1 to Xn, Y1 to Yn), an associated electrical measurement field array for the spatially resolving detection of a capacitive influence on the detection surface (10);
a handle (3) mounted on the detection surface (10) movably along an adjustment path parallel to the detection surface (10), in order to perform an operating input by means of manually effected movement in a movement direction, for example by an operator (B) touching the handle (3);
a position indicator (4) moved concurrently with the handle (3);
and
a coupling device (5) arranged on the detection surface (10) and having a first surface, which faces the detection surface (10) and on which a second array of coupling electrodes (6a, 6b, 6c) for capacitive coupling with the array electrodes (X1 to Xn, Y1 to Yn) is formed, and having a second surface, which faces the position indicator (4) and faces away from the detection surface (10) and on which a third array composed of a plurality of mutually spaced apart contact surfaces (7a, 7b, 7c) is formed, wherein the contact surfaces are arranged along one or along a plurality of tracks parallel to the adjustment path in such a way that they are touch-contacted by the position indicator (4) selectively and depending on the position of the handle (3) along the adjustment path;
wherein the coupling device (5) includes a plurality of electrically conductive connections (8a, 8b, 8c), the number of which corresponds to at least the number of contact surfaces (7a, 7b, 7c) and which are configured to electrically conductively connect in each case one of the coupling electrodes (6a, 6b, 6c) to a contact surface (7a, 7b, 7c) in order to capacitively influence at least one of the measurement fields of the measurement field array in a position-dependent manner in the event of touch-contacting with the position indicator (4);
and wherein the electronic evaluation unit (14) is configured to detect the position-dependent influencing of the measurement field array in order to obtain and to output position information and/or movement information of the handle (3), wherein the coupling device (5) comprises at least one substrate (9a) composed of electrically insulating material and the conductive connections are each formed, at least in some portions, as a conductor track (8a', 8b', 8c') provided by a conductive coating of the substrate (9), and at least two connections (8a, 8b, 8c) differ in terms of the length of their conductor tracks (8a', 8b', 8c'), wherein the first array of array electrodes (X1 to Xn, Y1 to Yn) comprises a regular grid structure having a smallest periodicity described by the smallest distance (a) between most closely adjacent nodes (K1n, K31);
**characterized in that** the coupling device (5) is fixedly placed on the detection surface (10) in such a way that the geometric centre points of the coupling electrodes (6a, 6b, 6c) are in each case situated opposite a node (K1n, K31); and **in that** at least two connections (8a, 8b, 8c) differ in terms of the length of their conductor tracks (8a', 8b', 8c') by at least the smallest periodicity.

2. Input apparatus (1) according to the preceding claim, wherein the conductor tracks (8a', 8b', 8c') extend substantially parallel to the detection surface (10).

3. Input apparatus (1) according to either of the preceding claims, wherein the coupling device (5) comprises a layer construction (9) composed of a plurality of layers including the substrate (9a), and the contact surfaces (7a, 7b, 7c) and/or the coupling electrodes (6a, 6b, 6c) are formed as conductive coating of the outer layers of the layer construction (9).

4. Input apparatus (1) according to any of the preceding claims, wherein a plurality, preferably half to all, of the conductor tracks (8a', 8b', 8c') are configured to connect such a contact surface (7a, 7b, 7c) to such a coupling electrode (6a, 6b, 6c) whose geometric centre points are arranged offset with respect to one another in the case of perpendicular projection onto the detection surface (10).

5. Input apparatus (1) according to any of the preceding claims, wherein provision is made of a latching device for generating latching haptics and for predefining predefined positions along the adjustment path of the handle (3).

6. Input apparatus (1) according to the preceding claim, wherein at least one coupling electrode (6a, 6b) is provided which is electrically conductively connected to a plurality of contact surfaces (7a, 7b, 7c) via a plurality of conductor tracks (8a', 8b', 8c'), which preferably differ in terms of length.

7. Input apparatus (1) according to any of the preceding claims, wherein the coupling device (5) is configured such that, when the handle (3) is adjusted along the adjustment path in an adjusting direction, a plurality of directly adjacent and predefined positions are traversed, wherein at least two, preferably all, of the coupling electrodes (6a, 6b, 6c) contacted in total in these positions by means of the position indicator (4) are arranged in such a way that the spatial distance between them is greater than the smallest periodicity.

8. Input apparatus (1) according to any of the preceding claims, wherein the coupling device (5) is configured such that the position indicator (4) is capacitively coupled with an electric field of at least one array electrode via the coupling device (5).

9. Input apparatus (1) according to the preceding claim, wherein the coupling device (5) comprises at least one feed electrode (13) on its first surface and, electrically conductively connected thereto, at least one feed contact surface (11) on its second surface, by means of which the position indicator (4) is in touching contact at least in the predefined positions in order to couple the position indicator (4) with the electric field of at least one array electrode (X1 to Xn, Y1 to Yn).

10. Use of the input apparatus (1) according to any of the preceding claims in a motor vehicle.

## Revendications

1. Dispositif d'entrée (1), présentant :
un système de détection capacitif (2) qui présente une surface de détection (10) en réalisant un premier réseau d'électrodes de réseau (X1 à Xn, Y1 à Yn) associé à la surface de détection (10) ;
une unité d'évaluation électronique (14) reliée électriquement aux électrodes de réseau (X1 à Xn, Y1 à Yn) afin de réaliser au moyen du premier réseau d'électrodes de réseau (X1 à Xn, Y1 à Yn) un réseau de champs de mesure électrique associé pour une détection à résolution locale d'une influence capacitive sur la surface de détection (10) ;
une manette (3) qui est montée mobile sur la surface de détection (10) le long d'un chemin de réglage parallèle à la surface de détection (10) afin de procéder à une entrée de commande au moyen d'un mouvement effectué à la main dans la direction de mouvement, par exemple par un utilisateur (B) touchant la manette (3) ;
un transmetteur de position (4) déplacé conjointement avec la manette (3) ;
et
un système de couplage (5) disposé sur la surface de détection (10) et pourvu d'une première surface, tournée vers la surface de détection (10), sur laquelle un deuxième réseau d'électrodes de couplage (6a, 6b, 6c) est réalisé pour un couplage capacitif avec les électrodes de réseau (X1 à Xn, Y1 à Yn), et pourvu d'une deuxième surface, tournée vers le transmetteur de position (4) et détournée de la surface de détection (10), sur laquelle est réalisé un troisième réseau de plusieurs surfaces de contact (7a, 7b, 7c) disposées à distance les unes des autres, dans lequel les surfaces de contact sont disposées le long d'une ou de plusieurs pistes parallèles au chemin de réglage de façon à être mises en contact tactile par le transmetteur de position (4) sélectivement et en fonction de la position de la manette (3) le long du chemin de réglage ;
dans lequel le système de couplage (5) comporte plusieurs liaisons électriquement conductrices (8a, 8b, 8c) dont le nombre correspond au moins au nombre des surfaces de contact (7a, 7b, 7c) et qui sont réalisées pour relier électriquement respectivement l'une des électrodes de couplage (6a, 6b, 6c) à une surface de contact (7a, 7b, 7c) afin d'influencer de manière capacitive en fonction de la position au moins l'un des champs de mesure du réseau de champs de mesure en cas de contact tactile avec le transmetteur de position (4) ;
et dans lequel l'unité d'évaluation électronique (14) est réalisée pour détecter l'influence en fonction de la position du réseau de champs de mesure afin d'obtenir et de sortir une information de position et/ou une information de mouvement de la manette (3), dans lequel le système de couplage (5) présente au moins un substrat (9a) d'un matériau électriquement isolant, et les liaisons conductrices sont respectivement réalisées au moins par endroits comme une piste conductrice (8a', 8b', 8c') fournie par un revêtement conducteur du substrat (9), et au moins deux liaisons (8a, 8b, 8c) se distinguent par la longueur de leurs pistes conductrices (8a', 8b', 8c'), dans lequel le premier réseau d'électrodes de réseau (X1 à Xn, Y1 à Yn) présente une structure de grille régulière avec une plus petite périodicité qui est décrite par la plus petite distance (a) des noeuds (K1n, K31) les plus proches ;
**caractérisé en ce que** le système de couplage (5) est fixé sur la surface de détection (10) de telle sorte que les centres géométriques des électrodes de couplage (6a, 6b, 6c) sont respectivement opposés à un noeud (K1n, K31) ; et **en ce qu'**au moins deux liaisons (8a, 8b, 8c) se distinguent par la longueur de leurs pistes conductrices (8a', 8b', 8c') au moins de la plus petite périodicité.

2. Dispositif d'entrée (1) selon la revendication précédente, dans lequel les pistes conductrices (8a', 8b', 8c') s'étendent substantiellement en parallèle à la surface de détection (10).

3. Dispositif d'entrée (1) selon l'une quelconque des revendications précédentes, dans lequel le système de couplage (5) présente une structure en couches (9) contenant le substrat (9a) composée de plusieurs couches, et les surfaces de contact (7a, 7b, 7c) et/ou les électrodes de couplage (6a, 6b, 6c) sont réalisées comme un revêtement conducteur des couches extérieures de la structure en couches (9).

4. Dispositif d'entrée (1) selon l'une quelconque des revendications précédentes, dans lequel plusieurs, de préférence la moitié jusqu'à la totalité des, pistes conductrices (8a', 8b', 8c') sont réalisées pour relier une surface de contact (7a, 7b, 7c) à une électrode de couplage (6a, 6b, 6c) dont les centres géométriques sont disposés de manière mutuellement décalée dans une projection verticale sur la surface de détection (10).

5. Dispositif d'entrée (1) selon l'une quelconque des revendications précédentes, dans lequel un système d'encliquetage est prévu pour produire un effet haptique d'encliquetage et pour spécifier des positions prédéfinies le long du chemin de réglage de la manette (3).

6. Dispositif d'entrée (1) selon la revendication précédente, dans lequel au moins une électrode de couplage (6a, 6b) est prévue qui est reliée de manière électriquement conductrice à plusieurs surfaces de contact (7a, 7b, 7c) par l'intermédiaire de plusieurs pistes conductrices (8a', 8b', 8c') qui se distinguent de préférence par la longueur.

7. Dispositif d'entrée (1) selon l'une quelconque des revendications précédentes, dans lequel le système de couplage (5) est réalisé de sorte que lors d'un réglage de la manette (3) le long du chemin de réglage dans une direction de réglage, plusieurs positions directement voisines et prédéfinies sont parcourues, dans lequel, parmi les électrodes de couplage (6a, 6b, 6c) contactées au total dans ces positions au moyen du transmetteur de position (4), au moins deux, de préférence toutes, sont disposées de telle sorte que leur distance physique est plus grande que la plus petite périodicité.

8. Dispositif d'entrée (1) selon l'une quelconque des revendications précédentes, dans lequel le système de couplage (5) est réalisé de sorte que le transmetteur de position (4) est couplé de manière capacitive à un champ électrique d'au moins une électrode de réseau, par l'intermédiaire du système de couplage (5).

9. Dispositif d'entrée (1) selon la revendication précédente, dans lequel le système de couplage (5) présente au moins une électrode d'alimentation (13) sur sa première surface et au moins une surface de contact d'alimentation (11) reliée de manière électriquement conductrice à celle-ci sur sa deuxième surface, au moyen de laquelle le transmetteur de position (4) est en contact tactile au moins dans les positions prédéfinies afin de coupler le transmetteur de position (4) au champ électrique d'au moins une électrode de réseau (X1 à Xn, Y1 à Yn).

10. Utilisation du dispositif d'entrée (1) selon l'une quelconque des revendications précédentes dans un véhicule automobile.
